# FASCICULE DE BREVET EUROPEEN

(11) **EP 1 160 211 B1**
(45) Date de publication et mention de la délivrance du brevet: **13.12.2006**
(21) Numéro de dépôt: 01401168.8
(22) Date de dépôt: 07.05.2001
(51) Int. Cl.: C03B 37/027, C03B 37/07

(54) **Procédé de fabrication d'une fibre optique avec contrôle des caractéristiques de transmission**
Verfahren zum herstellen einer optischen Faser mit gesteuerten Übertragungseigenschaften
Method of manufacturing an optical fibre with control of the transmission characteristics

(30) Priorité: 25.05.2000 FR 0006694
(43) Date de publication de la demande: 05.12.2001
(73) Titulaire: Draka Comteq B.V., 1018 TX Amsterdam (NL)
(72) Inventeur: Fleury, Ludovic, 78390 Bois D'Arcy (FR); de Montmorillon, Louis-Anne, 75017 Paris (FR); Sillard, Pierre, 78150 Le Chesnay (FR); Nouchi, Pascale, 78600 Maisons Laffitte (FR); Matau, Max, 78700 Conflans Sainte Honorine (FR)
(74) Mandataire: Blokland, Arie

(56) Documents cités:
- EP-A- 0 035 237
- EP-A- 0 518 749
- WO-A-99/54763
- GB-A- 2 074 723
- J.BRAUN ET AL.: "Multimikrorechner-Steuerungssystem zur Anwendung in der Lichtwellenleiter-Technologie" NACHRICHTENTECHNIK ELEKTRONIK, vol. 35, no. 4, 1985, pages 154-155, XP002157637 VEB VERLAG TECHNIK, BERLIN, DE ISSN: 0323-4657
- PATENT ABSTRACTS OF JAPAN vol. 1998, no. 6, 30 avril 1998 (1998-04-30) & JP 10 045421 A (SUMITOMO ELECTRIC IND. LTD.), 17 février 1998 (1998-02-17)
- PATENT ABSTRACTS OF JAPAN vol. 18, no. 601, 16 novembre 1994 (1994-11-16) & JP 06 227838 A (FURUKAWA ELECTRIC CO. LTD.), 16 août 1994 (1994-08-16)
- PATENT ABSTRACTS OF JAPAN vol. 17, no. 591, 28 octobre 1993 (1993-10-28) & JP 05 178634 A (FUJIKURA LTD.), 20 juillet 1993 (1993-07-20)
- PATENT ABSTRACTS OF JAPAN vol. 12, no. 467, 7 décembre 1988 (1988-12-07) & JP 63 185839 A (NT&T CORP.), 1 août 1988 (1988-08-01)
- PATENT ABSTRACTS OF JAPAN vol. 9, no. 145, 20 juin 1985 (1985-06-20) & JP 60 027616 A (SANTETSUKU CO. LTD.), 12 février 1985 (1985-02-12)
- PATENT ABSTRACTS OF JAPAN vol. 12, no. 316, 26 août 1988 (1988-08-26) & JP 63 085021 A (HITACHI CABLE LTD.), 15 avril 1988 (1988-04-15)

## Description

L'invention concerne les fibres optiques utilisées notamment pour les réseaux de télécommunications, et plus précisément la fabrication des fibres optiques.

Il est connu, pour la fabrication de fibres optiques, de fabriquer des préformes avec des dopages radiaux fonction du profil d'indice recherché dans la fibre, puis de procéder au fibrage ou étirage de la préforme pour obtenir la fibre optique. Un procédé classique de fabrication de préforme consiste à déposer successivement des couches de silice par MCVD (dépôt chimique en phase vapeur modifié)dans un tube de dépôt, de sorte à former un coeur de préforme, puis à former un manchon ou recharge autour du tube de dépôt; le manchon est généralement déposé sur la préforme de sorte que le diamètre extérieur de la préforme soit constant. D'autres techniques de fabrication comprennent l'OVD (dépôt de vapeur extérieur, en anglais "outside vapour deposition"), le VAD (dépôt de vapeur axial, en anglais " vapour axial deposition"). La préforme ainsi constituée est ensuite étirée.

Pour des applications dans les systèmes de transmission optiques, il est souhaitable que les caractéristiques de propagation des fibres - par exemple la dispersion chromatique - soient bien contrôlées le long de la fibre. On peut chercher à obtenir une valeur constante de dispersion, ou à faire varier de façon contrôlée la dispersion entre des valeurs opposées, comme proposé par exemple dans EP-A- 0 737 873. Les caractéristiques de propagation sont fonction du profil d'indice de la fibre, caractérisé par les indices de réfraction et rayons des couches déposées par MCVD, OVD ou VAD. Malgré tout le soin apporté à la fabrication de la préforme, il est possible que la préforme présente des défauts, et ne soit pas parfaitement homogène, ou plus généralement, ne soit pas parfaitement conforme aux valeurs de consigne.

De façon générale, on appelle pour une fibre "rayon de coeur" la valeur du rayon au delà de laquelle des variations de l'indice ou des rayons par rapport à la valeur de consigne n'ont qu'une influence minimale sur les caractéristiques de propagation de la fibre. Autrement dit, il s'agit de la fin du profil déterminant les caractéristiques de propagation de la fibre. A titre d'exemple, pour un profil en "ster (saut d'indice), le rayon de coeur correspond au rayon extérieur du saut d'indice. Pour un profil en trapèze et anneau, le rayon de coeur correspond au rayon extérieur de l'anneau. Cette définition se transpose à une préforme, par simple homothétie. Il importe de noter que le rayon de coeur ainsi défini pour une préforme peut être sensiblement différent du rayon intérieur du tube de dépôt.

Ces défauts sont par exemple des variations le long de la préforme du diamètre du coeur de la préforme, des rayons de couches déposées ou du diamètre extérieur de la préforme, par rapport aux valeurs nominales. Il peut aussi s'agir de variations le long de la préforme des indices des différentes couches de la préforme, par rapport aux indices de consigne. A titre d'exemple, une dilatation radiale de 1 à 2 % dans le diamètre du coeur de la préforme peut induire pour une fibre à pente de dispersion chromatique plate, des variations de dispersion chromatique de 1 à 2 ps/(nm.km) à 1550 nm; de telles variations diminuent le rendement de production. Pour des fibres DCF (fibre de compensation de dispersion) ou des fibres RDF (fibres à dispersion inverse), les variations des caractéristiques de la préforme peuvent induire des variations de dispersion atteignant 10 ps/(nm.km) à 1550 nm.

WO-A-98 25 861 décrit pour des applications de transmission en régime solitons une fibre de diamètre extérieur variable. Ce document mentionne que la dispersion varie comme le diamètre de la fibre. Il est proposé dans un premier mode de réalisation de ce document de déposer pour former une préforme des couches déposées présentant une épaisseur croissante d'une extrémité de la préforme à l'autre. On entoure le coeur de préforme conique ainsi formé d'une gaine avant de procéder à l'étirage de la fibre. Dans un deuxième mode de réalisation de ce document, il est proposé de former une préforme en déposant des couches d'épaisseur constante, mais avec des proportions de dopant variables. Dans un cas comme dans l'autre, l'étirage de la préforme fournit une fibre de diamètre constant dont les caractéristiques de propagation varient en fonction de la position le long de la fibre.

L'invention propose une solution au problème du contrôle des caractéristiques de propagation d'une fibre optique, du fait des variations des caractéristiques de la préforme par rapport aux caractéristiques de consigne. Elle permet une correction fine des défauts ou irrégularités des préformes, et assure un meilleur contrôle des caractéristiques de propagation des fibres obtenues. Elle est aussi d'une mise en oeuvre simple.

Plus précisément, l'invention propose un procédé de fabrication d'une fibre optique par étirage d'une préforme, comprenant :
- la détermination des variations des caractéristiques de la préforme par rapport aux caractéristiques de consigne, et
- la modification du diamètre de la fibre au cours de l'étirage, en fonction des dites variations, de manière

à compenser l'effet des dites variations sur les caractéristiques de propagation de la fibre.

Dans un mode de réalisation, la préforme présente un diamètre extérieur constant, et l'étape de détermination comprend la mesure du diamètre du coeur de la préforme. Dans ce cas, la modification du diamètre de la fibre s'effectue avantageusement de sorte que la variation relative du diamètre soit opposée à la variation relative du diamètre du coeur de la préforme.

Dans un autre mode de réalisation, les caractéristiques sont des caractéristiques géométriques, telles que le diamètre de la préforme, les rayons des couches de la préforme ou le diamètre du coeur de préforme. Les caractéristiques peuvent aussi ou alternativement être des caractéristiques optiques, telles que les indices des différentes couches de la préforme.

De préférence, les modifications du diamètre de la fibre sont inférieures à une valeur limite prédéterminée, par exemple les modifications du diamètre de la fibre sont inférieures à 2 µm, ou inférieures à ±2% du diamètre nominal de la fibre.

D'autres caractéristiques et avantages de l'invention apparaîtront à la lecture de la description qui suit de modes de réalisation de l'invention, donnés à titre d'exemple uniquement.

L'invention propose, pour compenser les variations des caractéristiques de la préforme par rapport aux valeurs de consigne, de faire varier le diamètre de la fibre au cours du fibrage. La variation du diamètre de la fibre permet de compenser en tout ou partie les variations des caractéristiques de la préforme par rapport aux valeurs de consigne. L'invention repose sur la constatation qu'une variation limitée - typiquement de 1 à ±2 % - du diamètre de la fibre permet de compenser des inhomogénéités ou irrégularités de la préforme, et n'est pas gênante du point de vue de la propagation ultérieure dans la fibre.

La modification du diamètre de fibre au cours de l'étirage de la préforme permet de recentrer les caractéristiques de propagation dans leurs intervalles de spécification, dès que les caractéristiques géométriques - le diamètre de coeur de la préforme, les rayons des couches déposées, ou encore le diamètre extérieur de la préforme - ou les caractéristiques optiques - par exemple les indices des différentes couches de la préforme - s'écartent de leur valeur de consigne.

La variation de diamètre au cours de l'étirage dépend de la préforme, et plus exactement des caractéristiques de la préforme - par exemple le rayon de coeur, les rayons de couches déposées, le rayon extérieur de la préforme ou les indices dans la préforme. Ces caractéristiques peuvent être mesurées sur une préforme. Une telle mesure s'effectue sur un banc de mesure, par des techniques connues en soi. On peut par exemple utiliser pour la mesure du profil d'indice de réfraction de la préforme le banc de mesure commercialisé sous la référence P104 par la société PhotoKinetics.

La mesure de la préforme peut par exemple porter sur le diamètre extérieur et sur le diamètre de coeur de la préforme. On peut aussi le cas échéant mesurer l'ensemble du profil d'indice de la préforme. Le pas de la mesure peut être de quelques cm le long de la préforme; pour des procédés classiques de fabrication de la préforme, les variations du diamètre de coeur ou des autres caractéristiques par rapport aux valeurs nominales sont faibles le long de la préforme; un tel pas de mesure peut suffire pour repérer les variations des caractéristiques de la préforme par rapport aux valeurs de consigne.

A partir des caractéristiques géométriques ou optiques mesurées de la préforme; par exemple à partir du diamètre de coeur de la fibre et des caractéristiques optiques - indices et diamètres des sections déposées par CVD - des différentes parties de la préforme, on peut déterminer avant fibrage avec des outils de simulation classiques les caractéristiques de propagation de la fibre correspondantes aux différentes sections de la préforme, pour différents diamètres de fibrage.

L'invention propose de faire varier le diamètre extérieur de la fibre de sorte à contrôler les caractéristiques de propagation dans la fibre. Pour un fibrage classique, la variation du diamètre de la fibre peut s'effectuer au cours du fibrage de deux façons:
- par modification de la vitesse du cabestan de fibrage, ou
- par modification de la vitesse de descente de la préforme.

La première méthode permet une variation rapide du diamètre de la fibre; typiquement, on peut par une variation de la vitessse du cabestan modifier le diamètre de la fibre d'environ 2% sur une longueur de fibre de l'ordre du mètre pour une vitesse de fibrage de 200 à 2000 m/min; une telle variation du diamètre de fibre est bien adaptée pour des variations du diamètre de fibre sur des petites distances. La deuxième méthode permet une variation plus lente du diamètre de fibre, et permet de garder une vitesse de fibrage (ou vitesse du cabestan) constante. Une variation du diamètre de la fibre d'environ 2% s'obtient typiquement sur une longueur de fibre de 6 km environ.

Les deux méthodes peuvent être combinées; ainsi, il peut suffire de modifier la vitesse de descente de la préforme pour s'adapter aux variations mesurées; toutefois, on peut aussi agir directement sur la vitesse du cabestan de fibrage pour obtenir une régulation plus rapide, puis modifier ensuite la vitesse de descente de la préforme tout en revenant à la vitesse de fibrage originale. Ceci présente l'avantage d'une adaptation rapide aux variations, tout en conservant autant que possible la vitesse de fibrage normale.

A titre d'exemple, pour un profil à saut d'indice, on considère l'exemple où la mesure de la préforme indique que le rapport r entre le diamètre de coeur de la préforme (tel que défini plus haut) et le diamètre extérieur de la préforme est supérieur au rapport de consigne - toutes choses égales par ailleurs. Dans ce cas, pour un diamètre extérieur nominal constant de fibre, le diamètre de coeur de fibre est supérieur au diamètre de consigne; la dispersion chromatique de la fibre augmente alors par rapport à la valeur de consigne. L'invention propose donc dans cette hypothèse, de faire diminuer le diamètre extérieur de la fibre; le diamètre du coeur de fibre diminue aussi, et se rapproche de la valeur de consigne. La diminution du diamètre extérieur de la fibre permet dans ce cas de compenser la variation du rapport r par rapport à sa valeur nominale - les autres caractéristiques et notamment les caractéristiques optiques de la préforme étant conformes aux valeurs de consigne.

En sens inverse, si la mesure de la préforme révèle que le rapport entre le diamètre de coeur de la préforme et le diamètre extérieur de la préforme est inférieur au rapport de consigne, l'invention propose d'augmenter le diamètre extérieur de la fibre, pour compenser l'influence sur les caractéristiques de propagation de la fibre des variations géométriques de la préforme par rapport aux valeurs de consigne.

Dans l'exemple décrit ci-dessus, il est proposé d'utiliser des outils de simulation pour évaluer l'influence des variations de la préforme. On pourrait aussi utiliser à cet effet des mesures sur des préformes et des fibres réelles correspondantes, et constituer une base de données associant les caractéristiques de la préforme et les caractéristiques de la fibre. Plus généralement, on peut utiliser toute solution permettant d'associer des caractéristiques de la fibre à des variations des caractéristiques de la préforme par rapport aux valeurs de consigne, pour calculer les variations du diamètre de fibre à appliquer lors de l'étirage de la préforme.

Dans le cas le plus simple, pour un diamètre extérieur de préforme constant, la variation relative du diamètre de fibre par rapport à la valeur de consigne est opposée à la variation relative du diamètre de coeur de préforme par rapport à la valeur de consigne, de sorte à ce que le diamètre du coeur de la fibre reste constant ou sensiblement constant.

Plus généralement, on peut déterminer les variations du diamètre extérieur de la fibre de sorte que le diamètre du coeur de fibre tende vers une valeur qui compense au mieux les variations de toutes les caractéristiques géométriques ou optiques de la préforme par rapport aux caractéristiques de consigne.

Si la mesure des caractéristiques de la préforme est discrète, on peut appliquer des variations discrètes du diamètre de la fibre. Ainsi, pour un pas de mesure de quelques cm, on peut calculer des valeurs de diamètre de la fibre dans des plages de l'étirage correspondant à quelques cm de la préforme, de part et d'autre des points de mesure. On fait ensuite varier le diamètre de fibre en fonction des diamètres calculés pour ces points discrets, avec une interpolation linéaire ou polynomiale.

Par ailleurs, l'invention propose aussi de limiter les variations du diamètre extérieur de la fibre; pour un diamètre nominal de 125 µm, elle propose que les variations de diamètre soient au maximum de ±2 µm, ou en valeur relative de ±2 %. Limiter les variations de diamètre de la fibre permet de limiter les variations des caractéristiques de propagation, et évite que les variations de diamètre n'aient un effet plus gênant que les écarts aux valeurs de consigne induites par la préforme. Cette limite permet aussi de rester dans les spécifications géométriques de la fibre, en termes de diamètre extérieur.

On donne maintenant des exemples de mise en oeuvre de l'invention, dans le cas d'une fibre DCF , dont les caractéristiques de propagation à 1550 nm sont les suivantes :
- dispersion chromatique C :- 75 ps/(nm.km) ;
- pente de dispersion chromatique C' : - 0,50 ps/(nm².km) ;
- section efficace : 20 µm² ;
- diamètre de mode 2W₀₂ : 5 µm;

Cette fibre présente un profil en échelon+anneau, avec un coeur d'un diamètre nominal de 15 *µ*m; la préforme nécessaire pour l'obtenir présente un profil analogue. On considère dans les exemples des variations du rayon de coeur A de la préforme et de l'indice Δn de l'échelon.

Dans un premier exemple, on ne considère que des variations du rayon de coeur A de la préforme, le profil d'indice restant homothétique au profil d'indice nominal; cette variation est indiquée dans la première colonne du tableau. Cette variation conduit selon l'invention à une variation de signe opposé du diamètre de fibre.

Dans le tableau suivant, la colonne Δfibre donne en pour cents la variation du coeur de fibre. Si l'invention n'est pas mise en oeuvre, pour une telle variation de ±2% du rayon de coeur A, la surface effective varie entre 19.2 *µ*m² et 22.3 *µ*m². En contrôlant le diamètre de la fibre comme le propose l'invention, dans une plage d'environ ±2%, toutes les caractéristiques de propagation peuvent être maintenues à leurs valeurs nominales. Le tableau montre les variations de caractéristiques de propagation lorsque l'invention est mise en oeuvre. Dans chaque cas, Δαv et Δαp sont respectivement les écarts en valeur relative de la quantité considérée à sa valeur nominale sans mise en oeuvre de l'invention (sans correction du diamètre de la fibre) ou après mise en oeuvre de l'invention (avec correction du diamètre fibre).

Les valeurs du tableau montrent que la variation de la surface effective Seff, de la dispersion chromatique C et de la pente de dispersion chromatique C' sont effectivement compensées par la mise en oeuvre de l'invention.

| | **Δ_{fibre} (%)** | **S_{eff} (µm²)** | | **C (ps/nm/km)** | | **C' (ps/nm²/km)** | |
|---|---|---|---|---|---|---|---|
| | | **Δav (%)** | **Δap (%)** | **Δav (%)** | **Δap (%)** | **Δav (%)** | **Δap (%)** |
| A varie de +2% | -2 | -4 | 0 | +22.6 | 0 | +18 | 0 |
| A varie de -2% | +2 | +12.5 | 0 | -31 | 0 | -19.4 | 0 |

Dans un deuxième exemple, on ne considère que des variations de l'indice Δn du coeur de la préforme, tous les autres paramètres étant fixés. On considère une variation du diamètre de fibre de sorte à maintenir une surface effective constante, dans une plage de ±0,1%. Les résultats obtenus sont donnés dans le tableau qui suit, avec les mêmes notations que précédemment.

| | **Δ_{fibre} (%)** | **S_{eff} (µm²)** | | **C (ps/nm/km)** | | **C' (ps/nm²/km)** | |
|---|---|---|---|---|---|---|---|
| | | **Δav (%)** | **Δap (%)** | **Δav (%)** | **Δap (%)** | **Δav (%)** | **Δap (%)** |
| Δn varie de +2% | -1.8 | -5.4 | 0 | +14 | -9 | +13 | -5.6 |
| Δn varie de -2% | +2 | +8 | 0 | -20.6 | +7.5 | -21 | -1 |

Le tableau montre que les variations du diamètre de fibre sont de signe opposé aux variations d'indice du coeur. Il montre aussi que l'invention permet de maintenir constante la surface effective, toutefois au prix de variations de la dispersion chromatique et de la pente de dispersion chromatique; ces variations sont toutefois nettement inférieures aux variations correspondantes lorsque l'invention n'est pas mise en oeuvre.

Dans un troisième exemple, on ne considère que des variations de l'indice Δn du coeur de la préforme, tous les autres paramètres étant fixés. On considère une variation du diamètre de fibre de sorte à maintenir une dispersion chromatique constante, dans une plage de ±0,1%. Les résultats obtenus sont donnés dans le tableau qui suit, avec les mêmes notations que précédemment.

| | **Δ_{fibre} (%)** | **S_{eff} (µm²)** | | **C (ps/nm/km)** | | **C' (ps/nm²/km)** | |
|---|---|---|---|---|---|---|---|
| | | **Δav (%)** | **Δap (%)** | **Δav (%)** | **Δap (%)** | **Δav (%)** | **Δap (%)** |
| Δnvarie de +2% | -1.15 | -5.4 | -2.4 | +14 | 0 | +13 | +1 |
| Δn varie de -2% | +1.45 | +8 | +1.6 | -20.6 | 0 | -21 | -7.6 |

Le tableau montre que les variations du diamètre de fibre sont de signe opposé aux variations d'indice du coeur. Il montre aussi que l'invention permet de maintenir constante la dispersion chromatique, dans la plage recherchée; comme dans l'exemple précédent, les autres paramètres de propagation - la surface effective et la pente de dispersion chromatique - varient; ces variations sont toutefois nettement inférieures aux variations correspondantes lorsque l'invention n'est pas mise en oeuvre.

Dans un quatrième exemple, on ne considère que des variations de l'indice Δn du coeur de la préforme, tous les autres paramètres étant fixés. On considère une variation du diamètre de fibre de sorte à maintenir une pente de dispersion chromatique constante, dans une plage de ±0,1%. Les résultats obtenus sont donnés dans le tableau qui suit, avec les mêmes notations que précédemment.

| | **Δ_{fibre} (%)** | **S_{eff} (µm²)** | | **C (ps/nm/km)** | | **C'(ps/nm²/km)** | |
|---|---|---|---|---|---|---|---|
| | | **Δav (%)** | **Δap (%)** | **Δav (%)** | **Δap (%)** | **Δav (%)** | **Δap (%)** |
| Δn varie de +2% | -1.25 | -5.4 | -2 | +14 | -1 | +13 | 0 |
| Δn varie de -2% | +2.1 | +8 | -0.7 | -20.6 | +7.5 | -21 | 0 |

Le tableau montre encore que les variations du diamètre de fibre sont de signe opposé aux variations d'indice du coeur. Il montre aussi que l'invention permet de maintenir constante la pente de dispersion chromatique, dans la plage recherchée; comme dans les deux exemples précédents, les autres paramètres de propagation - la surface effective et la dispersion chromatique - varient; ces variations sont encore une fois nettement inférieures aux variations correspondantes lorsque l'invention n'est pas mise en oeuvre.

Dans un cinquième exemple, on considère encore des variations de l'indice Δn du coeur de la préforme, tous les autres paramètres étant fixés. On cherche dans l'exemple à maintenir la surface effective dans une plage de ±1% de la valeur nominale. Le fait d'accepter des variations plus importantes de la surface effective permet, par rapport au deuxième exemple, de limiter encore plus les variations de la dispersion chromatique et de la pente de dispersion chromatique. Les résultats obtenus sont donnés dans le tableau qui suit, avec les mêmes notations que précédemment.

| | **Δ_{fibre} (%)** | **S_{eff} (µm²)** | | **C (ps/nm/km)** | | **C' (ps/nm²/km)** | |
|---|---|---|---|---|---|---|---|
| | | **Δav (%)** | **Δap (%)** | **Δav (%)** | **Δap (%)** | **Δav (%)** | **Δap (%)** |
| Δn varie de +2% | -1.6 | -5.4 | -1 | +14 | -6 | +13 | -3.4 |
| Δnvarie de -2% | +1.6 | +8 | +1 | -20.6 | +2.3 | -21 | -6 |

Le tableau montre que les variations du diamètre de fibre sont de signe opposé aux variations d'indice du coeur. Il montre aussi que l'invention permet de limiter les variations de la surface effective, de la dispersion chromatique et de la pente de dispersion chromatique.

Les exemples proposés sont représentatifs de diverses stratégies d'optimisation de la fibre. D'autres stratégies sont possibles, en fonction des paramètres de propagation qui sont pertinents. On pourrait notamment considérer les stratégies suivantes :
- détermination des corrections du diamètre de fibrage à partir de la mesure du coeur de préforme; cette détermination suppose le diamètre extérieur de la préforme constant et ignore les variations d'indice ainsi que les variations entre les rapports entre rayons des couches déposées jusqu'au rayon de coeur de la préforme, le profil étant supposé uniquement dilaté;
- détermination des corrections du diamètre de fibrage à partir des données géométriques du profil, par mesure du coeur de préforme et des rayons des couches déposées; cette détermination suppose le diamètre extérieur de la préforme constant;
- détermination des corrections du diamètre de fibrage à partir des données géométriques du profil, par mesure du coeur de préforme, des rayons des couches déposées, mais aussi du diamètre extérieur de préforme;
- détermination des corrections du diamètre de fibrage à partir des données géométriques et optiques du profil, par mesure du coeur de préforme, des rayons des couches déposées, du diamètre extérieur de préforme, mais aussi des indices des différentes couches déposées.

On n'a pas non plus dans les exemples considérés des variations simultanées du diamètre de coeur et de l'indice de coeur. En pratique, lorsque le rayon et l'indice de coeur s'écartent tous deux de leurs valeurs nominales, on peut chercher une solution optimale qui vise à recentrer au mieux les 3 caractéristiques de propagation dans leurs intervalles de spécifications.

Enfin, de facon très générale, on peut envisager des variations de plusieurs paramètres du profil d'indice. Une solution optimale existe, du même type que la solution proposée dans le cinquième exemple, qui vise à recentrer au mieux les caractéristiques de propagation dans des intervalles de spécifications donnés. Cette solution optimale se détermine comme expliquée plus haut, par exemple par simulation.

Bien entendu, la présente invention n'est pas limitée aux exemples et modes de réalisation décrits et représentés, mais elle est susceptible de nombreuses variantes accessibles à l'homme de l'art. On peut déterminer les variations du diamètre de fibre suivant des méthodes autres que celles décrites ci-dessus. On peut aussi considérer d'autres caractéristiques que les caractéristiques géométriques, et notamment les caractéristiques optiques.

Dans les modes de réalisation, l'invention est décrite dans une application permettant de conserver une valeur constante de la surface effective, de la dispersion chromatique ou de la pente de dispersion chromatique. Elle s'applique plus généralement pour compenser les effets des variations des caractéristiques de la préforme, par rapport aux valeurs de consigne. Elle permet de compenser les effets de ces variations sur les caractéristiques de la fibre - que celles-ci soient constantes ou non. Ainsi l'invention pourrait aussi s'appliquer au cas de préforme du genre de celles de WO-A-98 25 861, avec des valeurs de dispersion chromatique décroissantes, ou au cas de préformes du genre de celles de EP-A- 0 737 873, avec des valeurs de dispersion chromatique discrètes et alternées. Dans tous les cas, l'invention permet de contrôler les caractéristiques de propagation de la fibre par rapport aux caractéristiques de propagation recherchées.

## Revendications

1. Procédé de fabrication d'une fibre optique par étirage d'une préforme, comprenant :
- la détermination des variations des caractéristiques de la préforme par rapport aux caractéristiques de consigne, et
- la modification du diamètre de la fibre au cours de l'étirage, en fonction des dites variations, de manière à compenser l'effet des dites variations sur les caractéristiques de propagation de la fibre.

2. Le procédé de la revendication 1, **caractérisé en ce que** la préforme présente un diamètre extérieur constant, et **en ce que** l'étape de détermination comprend la mesure du diamètre du coeur de la préforme.

3. Le procédé de la revendication 2, **caractérisé en ce que** la modification du diamètre de la fibre s'effectue de sorte que la variation relative du diamètre est opposée à la variation relative du diamètre du coeur de la préforme.

4. Le procédé de l'une des revendications 1 à 3, **caractérisé en ce que** les dites caractéristiques sont des caractéristiques géométriques, telles que le diamètre de la préforme, les rayons des couches de la préforme ou le diamètre du coeur de préforme.

5. Le procédé de l'une des revendications 1 à 4, **caractérisé en ce que** les dites caractéristiques sont des caractéristiques optiques, telles que les indices des différentes couches de la préforme.

6. Le procédé de l'une des revendications 1 à 5, **caractérisé en ce que** les modifications du diamètre de la fibre sont inférieures à une valeur limite prédéterminée.

7. Le procédé de la revendication 6, **caractérisé en ce que** les modifications du diamètre de la fibre sont inférieures à 2 µm.

8. Le procédé de l'une des revendications 1 à 5, **caractérisé en ce que** les modifications du diamètre de la fibre sont inférieures à ±2% du diamètre nominal de la fibre.

9. Une fibre optique, **caractérisé en ce que** les modifications du diamètre de la fibre sont inférieures à ± 2% du diamètre nominal de la fibre.

## Claims

1. Method of producing an optical fibre by drawing out a preform, comprising:
- determination of variations in characteristics of the preform with respect to reference characteristics and
- modification of the diameter of the fibre in the course of drawing-out, as a function of said variations, so as to compensate for the effect of said variations on the propagation characteristics of the fibre.

2. The method of claim 1, **characterised in that** the preform has a constant external diameter, and **in that** the determination step comprises measurement of the diameter of the core of the preform.

3. The method of claim 2, **characterised in that** the modification of the diameter of the fibre is carried out so that the relative variation in the diameter is opposite to the relative variation in the diameter of the core of the preform.

4. The method of one of claims 1 to 3, **characterised in that** said characteristics are geometric characteristics such as the diameter of the preform, the radii of the layers of the preform or the diameter of the preform core.

5. The method of one of claims 1 to 4, **characterised in that** said characteristics are optical characteristics such as the indices of the different layers of the preform.

6. The method of one of claims 1 to 5, **characterised in that** the modifications of the diameter of the fibre are less than a predetermined limit value.

7. The method of claim 6, **characterised in that** the modifications of the diameter of the fibre are less than 2 µm.

8. The method of one of claims 1 to 5, **characterised in that** the modifications of the diameter of the fibre are less than ± 2 % of the nominal diameter of the fibre.

9. An optical fibre, **characterised in that** the modifications of the diameter of the fibre are less than ± 2 % of the nominal diameter of the fibre.

## Patentansprüche

1. Verfahren zur Herstellung einer optischen Faser durch Ziehen eines Vorformlings, umfassend:
- die Bestimmung der Abweichungen der Merkmale des Vorformlings bezüglich der Sollwertmerkmale, und
- die Modifizierung des Durchmessers der Faser während des Ziehens, in Abhängigkeit der Abweichungen, so dass die Wirkung der Abweichungen auf die Übertragungseigenschaften der Faser kompensiert wird.

2. Verfahren nach Anspruch 1, **dadurch gekennzeichnet, dass** der Vorformling einen konstanten Außendurchmesser aufweist, und dass der Schritt der Bestimmung das Messen des Durchmessers des Kerns des Vorformlings umfasst.

3. Verfahren nach Anspruch 2, **dadurch gekennzeichnet, dass** die Modifizierung des Durchmessers der Faser derart erfolgt, dass die relative Abweichung des Durchmessers der relativen Abweichung des Durchmessers des Kerns des Vorformlings entgegengesetzt ist.

4. Verfahren nach einem der Ansprüche 1 bis 3, **dadurch gekennzeichnet, dass** die Merkmale geometrische Merkmale sind, wie der Durchmesser des Vorformlings, die Radien der Schichten des Vorformlings oder der Durchmesser des Kerns des Vorformlings.

5. Verfahren nach einem der Ansprüche 1 bis 4, **dadurch gekennzeichnet, dass** die Merkmale optische Merkmale sind, wie die Indizes der verschiedenen Schichten des Vorformlings.

6. Verfahren nach einem der Ansprüche 1 bis 5, **dadurch gekennzeichnet, dass** die Modifizierungen des Durchmessers der Faser kleiner als ein vorbestimmter Grenzwert sind.

7. Verfahren nach Anspruch 6, **dadurch gekennzeichnet, dass** die Modifizierungen des Durchmessers der Faser kleiner als 2 µm sind.

8. Verfahren nach einem der Ansprüche 1 bis 5, **dadurch gekennzeichnet, dass** die Modifizierungen des Durchmessers der Faser kleiner als ± 2% des nominalen Durchmessers der Faser sind.

9. Optische Faser, **dadurch gekennzeichnet, dass** die Modifizierungen des Durchmessers der optischen Faser kleiner als ± 2% des nominalen Durchmessers der Faser sind.
